# EUROPEAN PATENT APPLICATION

(11) **EP 4 086 387 A1**
(43) Date of publication of application: **09.11.2022**
(21) Application number: 22020199.0
(22) Date of filing: 02.05.2022
(51) Int. Cl.: D06N 5/00, C08L 95/00, B32B 5/02, B32B 11/10

(54) **A BITUMINOUS FACER FOR INSULATING PANEL**

(30) Priority: 03.05.2021 IT 202100011168
(71) Applicant: IWIS Insulation Waterproofing Industrial Systems S.R.L., 31029 Vittorio Veneto (TV) (IT)
(72) Inventor: MAZZER, Luciano, 31029 Vittorio Veneto (TV) (IT)
(74) Representative: Spagnolo, Chiara

(57) **Abstract**

A bituminous facer, particularly for insulating panel, made up of a coating consisting of three layers, respectively, one glass sheet layer which is applied on one side with the polyvalent compound and protected on the same side by a nonwoven fabric of polypropylene, or other natural and/or synthetic materials and siliceous sands, said polyvalent compound being a mixture made up of distilled bitumen, post-consumer polymers, metallocene polypropylene, LLDPE and a plasticizer such as linear polyalkylbenzene.

## Description

The present invention relates to a facer, namely a multi-layer coating, with a bituminous compound applied thereon, to protect insulating panels.

### Field of application

It is widely known that a suitable insulation is critical to realize, for example, a covering able to reduce heat loss, to allow a remarkable economy of operations, to obtain considerable advantages in terms of living comfort and also to fulfill a good protective function for the underlying and load-bearing structure. Generally, the term insulation should be understood as meaning a layer of material having the primary function of thermal non-conductivity; such a function is often combined with the soundproofing function in order to obtain a thermal and acoustic insulation. The effectiveness of such an insulation mainly depends on the features of the used material, on the used thickness and also on the specific configuration of the packet, for instance, of the roof. Nowadays, several insulating materials are available on the market having high, both thermic and acoustic performances, being provided in different forms such as for example slabs, panels, or coils, and also with a different thickness; it has been however verified that the known and conventional configurations can be improved in multiple aspects such as, for example, weight, total thickness, cost, thermal-hygrometric effectiveness in different seasons and also long-term stability.

The invention is intended for use in the sector of semi-finished components for building, and bituminous coatings of different nature with different weight and thickness are currently available on the market, which are used in the construction industry. These bituminous coating layers are usually used to protect insulating panels, which are widely used in the building industry for the thermal insulation of roofs and walls. In principle, the finishing of such products can be made with bituminous carboard, mineralized glass, single bituminous glass, polyester, aluminum, or other fabrics or synthetic or natural fibers.

In the different suggested versions that can be found on the market, said bituminous coatings, known as facers, are applied in correspondence to at least one side, more often both sides, of the insulating panel during its shaping, defining indeed its two faces. In the following intended use these so coated insulating panels are then covered in a following application step with bitumen/polymer membranes based on SBS, APAO, APP, by flame application, or with bitumen polymer membranes based on SBS by cold application (self-adhesives). The bituminous glass coatings are generally made up of oxidized bitumen or of an elastomeric or plastomeric bituminous blend. To this end it should be specified that other definitions such as elasto-plastomeric or plasto-elastomeric are nothing else than neologisms of a commercial nature coined by manufacturers of waterproofing membranes, because in this case these membranes contain polymers of different nature which cannot always be classified.

As regards the compounds constituting the bitumen polymer membranes, it has been observed that UNI 8818 regulations divide the bitumen polymer membranes in two big groups: BPP (Bitumen Polymer Plastomer) and BPE (Bitumen Polymer Elastomer). The UNI 8829 regulations provide the acceptance limits for membranes which fall only into the two mentioned categories. Plasticity and Elasticity are referred to the single polymers used to modify the bituminous compounds: in the first case, specifically, the atactic polypropylene (APP- plastic behavior), in the second case, specifically, the styrene-butadiene-styrene (SBS- elastic behavior).

### State of the art

Bearing in mind the above, research has been therefore done - although not deepened- within the patent literature and the following documents have been found to this aim, D1 GB2052387A (Yamamoto), D2 GB2055326 (Bullen) and D3 EP2364841 (Faotto).

D1 discloses a bituminous waterproofing panel for thermal insulation made up of: i) a modified bitumen layer comprising as main component a bitumen mixture and at least one inorganic filler, which layer is shaped in the form of a thick panel; (ii) a flat plate rolled on each surface of the modified bitumen layer, said flat plate consisting of a fibrous plate, and (iii) one layer of thermal insulating material bound through the flat plate to a surface of the modified bitumen layer, and wherein said flat slabs are nonwoven glass fabric.

D2 precedes D1 in time and discloses a lightweight, thermal insulating panel which can be used to construct and repair buildings, said panel comprising an external layer, pre-exposed to environmental agents and made up of waterproof material, and an internal layer of reinforced synthetic plastic foam. A lightweight, thermal insulating panel is provided according to the invention comprising an external layer pre-exposed to environmental agents and made up of waterproof material, and an internal layer of reinforced synthetic plastic foam, whose internal surface can be profiled during manufacturing in order to fit to the profile of a surface, on which the panel has to be applied. The waterproof material pre-exposed to the environmental agents can consist of a suitable polymer, chlorosulphonated polyethylene, a core of saturated polyester coated with a polymer-modified bitumen or a base of amianthus/fiberglass or polyester with a polymer-modified bitumen. The internal layer can comprise a foam of urethane or polyisocyanurate or expanded polystyrene surrounding a net reinforcement of bituminous woven fiberglass or a woven net in polyester and the reinforced foam can be directly produced on the internal surface of the external layer or separately formed and then glued to the external layer with mastic or another suitable adhesive.

D3 discloses a structure of a non-conductive panel, in particular for the thermal insulation of buildings, made up of expanded polyurethane and in which one or both faces are provided with a flexible support made up of a first layer consisting of a fiberglass reinforcement or reinforcement of hybrid glass or mixed natural, mineral, and/or synthetic fibers and of a second layer consisting of a nonwoven fabric in polypropylene, warp-weft woven, plastic film in PE (polyethylene) or PET (polyethylene terephthalate or polyester), glass net, polypropylene or aggregates as finishing. Between the first and the second layer a bituminous, elasto-plastomeric bitumen-polymer blend is interposed, which is applied on one side of said first layer.

It is therefore reasonable to consider as known a bituminous, thermal insulating and waterproofing panel comprising:
- a modified bitumen layer;
- a flat plate rolled on each surface of the modified bitumen layer, said flat plate consisting of a fibrous plate;
- a layer of thermal insulating material bound through the flat plate to a surface of the modified bitumen layer, and wherein said flat slabs are nonwoven glass fabric;
and wherein said bituminous mixture of elasto-plastomeric polymer bitumen comprises:
- distilled bitumen (penetration 60-400 dmm): 40-80%, PP (IPP and/or APP): 5-15%, PE (LDPE and/or HDPE): 5-15%, SBS: 5-10%, CaC03:10-40%; or
- distilled bitumen: 60%, IPP: 5%, APP: 4%, LDPE: 1%, HYPE: 7%, SBS: 1%, CaCO3: 22%; or
- distilled bitumen: 55%, IPP: 5%, APP: 3%, LDPE: 1%, HDPE: 6.2%, SBS: 1.5%, CaCO3: 30%; or
- distilled bitumen: 67%, IPP: 1.5%, APP: 2.5%, LDPE: 0.5%, HDPE: 4.5%, CaCO3: 24%; or
- distilled bitumen: 50%, IPP: 3%, APP: 2.5%, LDPE: 1%, HDPE: 5.5%, CaCO3: 38%.

### Drawbacks

Briefly, it is widely known to the operators of the building sector that in the traditional solutions there is an actual incompatibility between APP (plastic) compounds and SBS (elastic) compounds. In other words, this means that on an insulating panel with an APP modified bitumen coating, as suggested above, only APP or APAO membranes should be applied, while SBS membranes should be applied on panels with only a SBS-based coating. In this respect, nowadays no technology for bituminous glass production has considered this aspect, indistinctly applying any type of membrane on the same panel coating with consequent possible problems during the application steps, with regards to the following reasonable, partial or total detachment after the laying of the mantle to finish.

An object of the present invention is also to avoid the drawbacks cited above.

### Summary of the invention

This and other aims are fulfilled with the present invention according to the characteristics as in the appended claims, by solving the exposed problems by means of a bituminous facer, particularly for insulating panel, consisting of a coating made up of three layers, respectively, a glass sheet layer which is applied on one side with the polyvalent compound and protected on the same side by a nonwoven fabric of polypropylene, or other synthetic and/or natural materials and siliceous sands, said polyvalent compound being a mixture consisting of distilled bitumen, post-consumer polymers, metallocene polypropylene, LLDPE and a plasticizer such as linear polyalkylbenzene.

### Aims

In this way through the considerable creative contribution whose effect constitutes an immediate technical progress, several advantages are obtained.
Firstly, the coating or facer providing the use of an innovative, bituminous compound, allows to produce insulating panels, which in the following laying step, can be covered by any type of waterproofing membrane, independently from their modification component (APP/SBS/APAO). As it will be afterward described, this is made possible through the use in said panel coating of a special bituminous blend or compound with the addition of polymers and highly technological plasticizers.

As a result, there is the actual possibility to obtain excellent technical performances of the bituminous coating with respect to the known art due to the high stability of the bituminous compound. The use of specific metallocene polymers and of LLDPE (linear low-density polyethylene), both extended with linear polyalkylbenzene, allows the bituminous compound to remain nearly preserved during all the working steps, related both to the direct production of the coating, and to the following shaping of the insulating panel.

A second advantage is the calibrated rheology of the compound, which considerably reduces the possible risk of permeation of the bituminous compound on the surface of the glass sheet in the manufacturing thereof, and so a phenomenon which heavily compromises the correct expansion and adhesion of the foams in the panel working. Generally, the viscosity range of the plastomeric compounds (also known as elasto-plastomeric) ranges from 5000 to 15000 cP, while in the case of the new coating, subject of the present invention, this range is reduced from 8500 to 11500 cP.

A third advantage has to be referred to a higher adhesion in the application of the waterproofing membrane (whether it is in SBS/APP/APAO) on the coating of the insulating panel. Such a value is underlined by the considerable increase of the peel resistance (peeling) on all the three membrane categories and particularly on the elastomeric formulation (equal to about +37%), as a proof of the lower compatibility of the known art coatings when they are applied on SBS compounds and, in any case, of the higher compatibility of the coating subject of the present invention.

The fourth advantage relates to the lower decay and stress of the compound during the working steps to obtain the facer. The behavior of the new formulation subjected to repeated thermal stress underlines a greater stability, which is more than the double with respect to the known art. This results in a better workability during the manufacturing steps of the panels having a thickness greater than 80 mm, which notoriously have significant exothermic reactions during the manufacturing process. These exothermic reactions, if they are not blocked by a suitable coating, can affect the correct distribution of the foams or the adhesion between different slabs of the panel once it is stacked and packed.

Further advantages relate to the reduced use of flames for applying the overlying waterproofing membrane (about 20% less), due to the versatility of the formulation subject of the present invention with respect to the known art. Tests conducted with the RMC (Rotary Microtome Cryostat) accurately underlined the adhesion areas of the membrane applied on the bituminous coating and the related differences with respect to the known state of the art.

Last but not least, the use of modifying polymers in the bitumen has been totally reduced, particularly of LDPE and IPP. Despite the use of noble polymers, the overall costs of the coating are however competitive with respect to traditional layers available on the market but with a definitely higher performance in terms of durability. The storage time before the coating is used by the panel producers can significantly exceed the traditional 12 months suggested by the main producers.

These and also other advantages will be evident or will be suggested by the following detailed description of a preferred embodiment with the aid of the enclosed schematic drawings, whose details are not to be intended as limiting but only exemplary.

### Content of the drawings

Figure 1 represents a stratification of the facer subject of the present invention;
Figure 2 is a detailed section view of the facer of Figure 1;

### Practical realization of the subject matter of the invention

Below a facer (A), namely a three-layer-bituminous coating consisting of a glass sheet, a modified bitumen layer and a surface finishing is described, which, being polyvalent, can also be coupled to at least one layer of thermal insulating material in order to achieve an insulating panel to be used in the building sector.

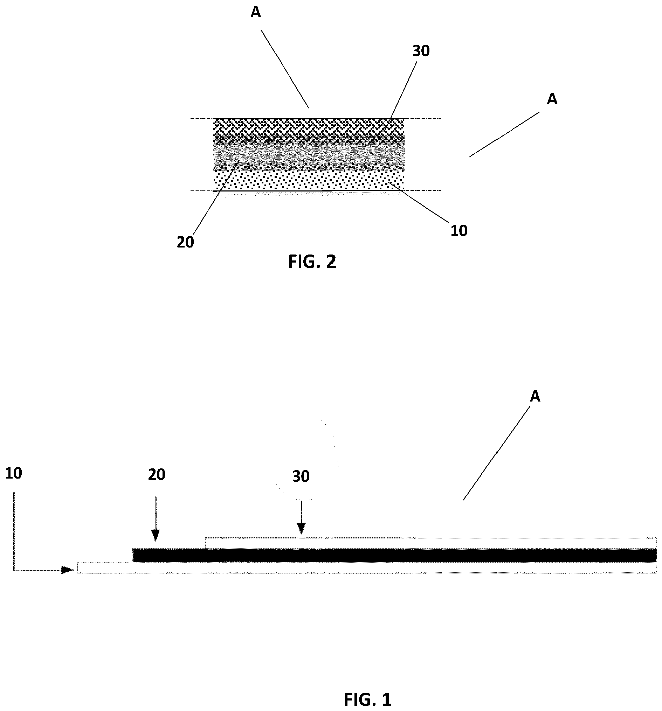

Also with reference to the Figures (Figs. 1-2), the new coating has a stratification providing: a glass sheet from 50 to 120 gr/m² (10), a polyvalent bituminous compound (20), and, in this case, a nonwoven fabric of polypropylene (30). The weight per m² of the facer subject of the present invention ranges, according to the facer type, from 280 to 750 gr/m². The coating is manufactured with specific production lines. In principle, in a primary mixer a mixture is prepared consisting of distilled bitumen, polymers of different quality, a plasticizer, and calcium carbonate (20). The mixing takes place for about 3 hours at a temperature of 180°C. Once said composition (20) is optimally dispersed, it is moved to a secondary mixer and successively pumped in the in-line impregnation tank. At this point in said in-line impregnation tank for the single bituminization step the glass sheet (10) is applied to be partially impregnated on one side with the previously obtained compound (20), and, in correspondence of the first return roller, it is applied over and in correspondence of the previous bituminous compound so applied (20), namely on the same side with the applied compound (20) of the glass sheet (10), the layer of nonwoven fabric of polypropylene (30), which also in such a case is partially impregnated, or other synthetic and/or natural materials and siliceous sands, see Figure 2. At this point the facer (A) so obtained directly passes into the cooling and packing steps.

The glass sheet (10) composing the facer (A) is the support on which the bituminous compound (20) is applied. Where the application of the facer (A) is intended to provide the coupling to a layer of thermal insulating material in the realization of an insulating panel, it is the support which is arranged in direct contact during the working steps of the insulating panels. The glass sheet (10) is a product made up of thin and short glass fibers having a diameter in the scale of a hundredth of a millimeter and an approximate length between 15 and 30mm; the fibers are held together by special polymeric binders, which usually are 18-30% of the entire mass. The mass of fibers and binder is hot rolled when it is still hot, so as to obtain a planar and homogeneous cloth, which is then wound in coils. Currently, the glass sheet commercially available is classified according to the mass per surface area which ranges from 30 to 150 g/m², and according to the width. There are also reinforced versions having longitudinal fiberglass, or fiberglass coupled with other materials such as aluminum and polyester and it is widely used for the production of bituminous membranes, undertile membranes and coatings for insulating panels.

From the functional point of view, the choice of the glass sheet (10) in the composition of the facer (A) is derived from a series of advantages. In particular because of its chemical composition, it is basically silicon dioxide- SiO2, is extremely insensible to heat and it maintains the shape stability in applications at a room temperature. Still because of his chemical composition and despite being in admixture with polymeric binders, it can be used as a good barrier to flames, because silica alone does not have a flash point and melts at 1726°C. Finally, thanks to the reduction of glass into fibers, which greatly decrease the embrittlement due to the presence of crystallization deficiencies (small cracks, air, etc.), the glass sheet (10) has an excellent mechanical tensile strength.

Below are listed the typical features of a glass sheet (10) of 100g/m² which can be used in the realization of the facer (A).

| **Property** | **Unit of measurement** | **Typical value** | **Tolerance** |
|---|---|---|---|
| Mass per surface area | g/mq | 100 | +/-8 |
| Thickness | mm | 0,80 | +/-0,05 |
| Fiber lenght | mm | 18 | +/-3 |
| MD Tensile strength | N/50/mm | 450 | -100 |
| CMD Tensile strength | N/50/mm | 250 | -50 |

Concerning the term bituminous compound, it has to be said that usually it should be understood as meaning any mixture consisting of bitumen and other components. At room temperature the bituminous compound is in a solid state, this is the reason why it has to be worked at a temperature exceeding at least 120°C when it is in a liquid state.
Any bituminous compound is classified according to standard parameters, whose measuring mode is regulated, which are:
- Specific weight;
- Needle penetration at a given temperature in order to describe how far a compound is more/less soft.
- Softening point with the ring and ball method in order to describe when the blend begins its passage from a solid to a liquid state (since the melting point for mixtures does not exist);
- Brookfield viscosity.
The special polyvalent compound (20), which is used in the realization of said facer (A), as seen is a mixture consisting of distilled bitumen, post-consumer polymers, metallocene polypropylene, LLDPE and a plasticizer such as linear polyalkylbenzene. Its composition is outlined in the following table:

| **Component** | **Percentage traction, w/w [%]** |
|---|---|
| Isotactic post-consumer polypropylene (IPP) | 2 - 4 |
| Mixed post-consumer polyethylene (HDPE + LDPE) | 2 - 4 |
| Metallocene polypropylene (PP-m) | 2 - 4 |
| Linear low-density polyethylene (LLDPE) | 2 - 6 |
| Linear polyalkylbenzene | 0,5 - 5 |
| Calcium carbonate | 20 - 50 |
| Industrial bitumen 180-200 | 50 - 80 |

The bituminous compound (20) has to be applied on the glass sheet (10) in the ratio of 200-600 g/m², according to the different types of coating to be obtained and therefore it has to be protected with the nonwoven fabric of polypropylene (30) or other natural or synthetic finishing or siliceous sands. The following table shows some typical values characterizing the bituminous compound (20):

| | | | |
|---|---|---|---|
| **Property** | **Unit** | **Value** | **Reference regulation** |
| Specific weight | g/cm³ | 1,10 - 1,35 | ASTM D71 |
| Softening point | °C | >130 | ASTM D36 |
| Needle penetration resistance at 25°C | dmm | 10 - 15 | ASTM D5 |
| Needle penetration resistance at 60 °C | dmm | 60 - 90 | ASTM D5 |
| Brookfield viscosity at 180°C S27 | cP | 8500 - 11500 | - |

In the bituminous compound (20) the linear low-density polyethylene (called by the acronym LLDPE) is a polymer based on substantially linear polyethylene with a significant number of short branchings. It is commonly derived from the copolymerization of ethylene with alkenes having a longer chain. The linear low-density polyethylene is structurally different from common low-density polyethylene (LDPE), because of the absence of long branchings (long chain branching). The higher linearity of LLDPE derives from the production processes, which are different from those of the LDPE. Generally, LLDPE is synthesized at lower temperatures and pressures through copolymerization of ethylene and of α-alkenes such as butene, hexene and octene. The copolymerization process produces a LLDPE copolymer having a narrower molecular weight distribution with respect to conventional LDPE and different rheological properties for the structure linearity. The following table shows the typical properties of the LLDPE:

| **Property** | **Unit** | **Value** | **Reference regulation** |
|---|---|---|---|
| MFI (230°C, 2.16Kg) | g/10min | 1 - 7 | ISO 1133-1 |
| Density at 25°C | Kg/dm3 | 0,915 - 0,935 | ISO 1183-1 |
| Shore Hardness (Shore D, 15sec) | - | 40 - 55 | ASTM D785 |
| Tractive force at yield | MPa | 10 - 25 | ASTM D638 |

Still in the bituminous compound (20) the misnomer metallocene polypropylene is intended to be understood as a specific polyolefin obtained from the polymerization of polypropylene (C3H6) by using special metallocene catalyzer, more specifically metallocene-derived cation of the [CP2MCH3] type, wherein CP are the cyclopentadienyl ions and M is a transition metal. Because of the special catalysis, it is possible to precisely adjust the stereospecificity of the obtained polymers considerably improving the mechanical properties as a result.
The industrial sectors in which the metallocene polypropylene is used are the same sectors in which the common isotactic polypropylene is used. Below are listed the typical characteristics of a PP produced by metallocene catalysis:

| **Property** | **Unit** | **Value** | **Reference regulation** |
|---|---|---|---|
| MFI (230°C, 2,16Kg) | g/10min | 9 - 500 | ISO 1133-1 |
| Density at 25°C | Kg/dm3 | 0,90 | ISO 1183-1 |
| Rockwell hardness (R scale ) | - | 100 - 110 | ASTM D785 |
| Tractive force at break | MPa | 30 - 40 | ASTM D638 |
| Elongation at break | % | 7 - 10 | ASTM D638 |

Further in the bituminous compound (20) the linear polyalkylbenzenes are materials derived from the polymerization of alkylbenzenes, namely monomers containing an aromatic part and an aliphatic part. They are industrially used as plasticizers for other polymeric compositions: in standard conditions they appear as oils and can be easily dispersed; moreover, since their molecules have a double nature (aromatic and aliphatic), they fit in the molecular chains of other polymers, decreasing the force of the secondary bindings, and increasing their compatibility. In the case of bituminous mixtures, polyalkylbenzenes are added to the formulation when the bitumen appears in a liquid form. However, their function is fulfilled at low temperatures, since processability and flexibility are enhanced.
They can be used pure, but polyalkylbenzenes are generally used in admixture. Below are listed some typical properties of a polyalkylbenzene mixture:

| **Property** | **Unit** | **Value** | **Reference regulation** |
|---|---|---|---|
| Density at 1S"L | Kg/dm3 | 0,88 - 092 | - |
| Hammability | °C | 160 - 180 | ASTM D92-90 |
| FLow point | °C | -30 | - |

The nonwoven fabric (30), a general term defining an industrial product similar to a fabric but obtained with a process other than weaving (interlacing of threads - weft and warp- through a frame), is joined to the bituminous compound (20) into the composition of the facer (A). Therefore, in a nonwoven, fibers have a random pattern where no ordered structure can be identified, while in a woven fabric the fibers have two prevalent directions which are orthogonal one to another (weft and warp). In the manufacturing industry layered or entangled fibers are typically used, which are joined together mechanically (e.g., with needles), with adhesives or with thermal processes.

In order to verify the best effectiveness of the facer (A) subject of the present invention with respect to the state of the art, some tests have been conducted.
With the first of these tests, it was decided to conduct the peel (or peeling) test by using equipment and conditions in compliance with the EN 12311-1 regulation.
In particular, a coating sample with a width of 100 mm is glued on a rigid support. A membrane sample with a size of 350 x 100 is adhered through heat on the coating for a surface of 150 x 100 mm. The free edge of the rigid support is fixed to the lower jaw of a dynamometer; the free bituminous membrane is turned upward and fixed on the upper jaw. At this point the dynamometer is activated, whose jaws separate at a speed of 100mm/min. The dynamometer records the peel resistance between coating and bituminous sheath expressed in N/10mm.
Below are listed the test results obtained with three different types of membrane and two different types of bituminous coating of the insulating panel. The data is the average of the results from 5 specimens.

| **Membrane type** | **Traditional coating (known art)** | **Coating subject of the invention** |
|---|---|---|
| Plastomeric bituminous membrane 4mm | 11.67 N/10mm | 12.82 N/10mm |
| Elastomeric bituminous membrane 4 mm | 9.11 N/10mm | 12.51 N/10mm |
| Bituminous membrane APAO 4 mm | 11.32 N/10 mm | 12.90 N/10 mm |

A second test conducted concerned the accelerated ageing of the facer (A).
In order to verify the stability of the bituminous coating when subjected to thermal stress, two accelerated ageing tests have been conducted: in a vented stove at 70 °C for 28 weeks and with QUV test - UVB lamps for 2.000 hours. Afterwards, the samples have been subjected to measuring of the cold flexibility loss with respect to the initial value. The aim of this type of test is to provide unmistakable indications about the preserved or compromised performance of the compound; the higher the value, the most the compound has been degraded. Below are shown the obtained results.

| | **Type** | **Thermal ageing vented stove visual aspect** | **QUV test 2000 hours visual aspect** | **Cold flexibility loss °C** |
|---|---|---|---|---|
| Plastomeric (elastoplastomeric) or elastomeric coating | | Oily surface. The phase inversion is impaired upon observation under a fluorescence microscope. | Disintegrated compound surface. Flaws which in some cases penetrate until they reach the glass sheet. | 11 |
| Coating subject of the invention | | Little oily surface. The phase inversion is still sufficiently preserved upon observation under a fluorescence microscope. | Preserved compound surface.Slight surface flaws. | 5 |

Still a conducted test has been meant to verify the application of a waterproofing membrane with an open flame to the facer (A).
More particularly in order to measure, under the same conditions (time/temperature/surface), the amount of flame necessary for an ideal adhesion of the waterproofing membrane on the bituminous panel coating, the welding test has been conducted. The elastomeric and plastomeric bituminous coatings of the known art and the coating subject of the invention have been considered. After the welding, a sample portion has been subjected to multiple section cuts at low temperatures with a Leica RMC (Rotary Microtome Cryostat). Such sections have been analyzed with a fluorescence microscope. The obtained results underline by difference that the new facer (A), subject of the inventive activity, needs 20% less flame for waterproofing the same surface of the coating which can be usually found on the market. At the end of the test, the following values have been found:

| **Type** | **Surface temperature time** - **surface** | **% adhesion** | **Surface temperature time** - **surface** | **% adhesion** |
|---|---|---|---|---|
| Plastomeric (elastoplastomeric) or elastomeric coating | 260 °C/ 6s/600 cm² | 70 | 290 °C/ 9s/600 cm² | 78 |
| Coating subject of the invention | 260 °C/ 6s/600 cm² | 83 | 290 °C/ 9s/600 cm² | 92 |

### Nomenclature

(A) facer or coating;
   (10) glass sheet layer;
   (20) bituminous compound;
   (30) nonwoven fabric layer.

## Claims

1. A facer or bituminous coating, particularly for insulating panel, consisting of three layers, respectively, one thin glass sheet layer (10) which is applied on one side with the bituminous compound and protected on the same side by a nonwoven fabric of polypropylene, or other natural and/or synthetic materials and siliceous sands (30), **characterized in that** the bituminous compound (20) is a mixture made up of distilled bitumen, post-consumer polymers, metallocene polypropylene, LLDPE and a plasticizer such as linear polyalkylbenzene.

2. A bituminous facer (A), according to claim 1, **characterized in that** the bituminous compound (20) is a mixture including at least the following components, expressed as percentage:
- Isotactic post-consumer polypropylene (IPP), from 2% to 4%;
- Mixed post-consumer polyethylene (HDPE + LDPE), from 2% to 4%;
- Metallocene polypropylene (PP-m), from 2% to 4%;
- Linear low-density polyethylene (LLDPE), from 2% to 6%;
- Linear polyalkylbenzene, from 0,5% to 5%;
- Calcium carbonate, from 20% to 50%;
- Industrial bitumen 180-200, from 50% to 80%.

3. A bituminous facer (A), according to claims 1 and 2, **characterized in that** the bituminous compound (20) has to be applied on the glass sheet (10) in the ratio of 200-600 g/m2, in such a way to obtain the desired facer (A).

4. A bituminous facer (A), according to the previous claims, **characterized in that** the bituminous compound (20) has the following features:
| **Property** | **Unit of Measurement** | **Value** | **Reference Standard** |
|---|---|---|---|
| Specific weight | g/cm3 | 1,10 - 1,35 | ASTM D71 |
| Softening point | °C | >130 | ASTM D36 |
| Needle penetration resistance at 25°C | dmm | 10 - 15 | ASTM D5 |
| Needle penetration resistance at 25°C | dmm | 60 - 90 | A STM D5 |
| Brookfield viscosity at 180°C S27 | cP | 8500 - 11500 | - |
